# EUROPEAN PATENT SPECIFICATION

(11) **EP 3 484 749 B1**
(45) Date of publication and mention of the grant of the patent: **29.11.2023**
(21) Application number: 17853904.5
(22) Date of filing: 21.09.2017
(51) Int. Cl.: B60R 9/10, B60P 3/07, B62H 3/02

(54) **MODULAR MOTOR VEHICLE INTEGRATED CARRIER RACK AND STORAGE SYSTEM WITH UNIVERSAL CONNECTIONS**
MODULARES, IN KRAFTFAHRZEUG INTEGRIERTES TRAGEGESTELL UND AUFBEWAHRUNGSSYSTEM MIT UNIVERSELLEN VERBINDUNGEN
SUPPORT DE TRANSPORT INTÉGRÉ À UN VÉHICULE MOTORISÉ ET SYSTÈME DE STOCKAGE POURVU DE RACCORDS UNIVERSELS

(30) Priority: 21.09.2016 US 201662397896 P; 08.12.2016 US 201662431792 P; 22.02.2017 US 201762462285 P; 14.08.2017 US 201762545409 P; 06.09.2017 US 201762554767 P
(43) Date of publication of application: 22.05.2019
(73) Proprietor: Anton, Mark A., Newport Beach, California 92663 (US)
(72) Inventor: Anton, Mark A., Newport Beach, California 92663 (US)
(74) Representative: Murgitroyd & Company
(86) International application number: PCT/US2017/052748
(87) International publication number: WO 2018/057756

(56) References cited:
- EP-A1- 1 440 847
- EP-A1- 1 440 847
- WO-A1-2016/138311
- US-A- 5 149 112
- US-A- 5 282 555
- US-A- 5 639 001
- US-A- 6 058 749
- US-A1- 2002 005 422
- US-A1- 2003 102 343
- US-A1- 2010 288 810
- US-A1- 2014 373 318
- US-B1- 6 503 019

## Description

### FIELD OF THE INVENTION

The subject matter described herein relates generally to lightweight, modular carrier rack and storage systems for motor vehicles, and more particularly to carrier rack systems that are integrated into a motor vehicle or can be attached to a tow hitch-carrier rack and storage systems that are designed through unique, universal connections to carry and store items such as bicycles, skis, snowboards, surfboards, wave boards, wheelchairs, scooters, luggage, fishing gear, accessories, and others.

### BACKGROUND OF THE INVENTION

Present carrier rack systems for motor vehicles, such as cars, trucks, vans, minivans, sports utility vehicles (SUV's), and motor homes, generally involve a system of multiple straps attached onto the vehicle, a system attached to a universal tow hitch, a system attached to a roof, or a system attached to a bumper. These systems are cumbersome, heavy, and difficult to store at home or in the vehicle when the systems are not in use. Additionally, these systems may not be adaptable to all types of vehicles, and when some of these systems are attached, they often make it difficult to access the trunk or doors. These systems are susceptible to theft and may scratch and damage the vehicle when attached and used.

In the case of systems involving multiple straps, these systems are complicated to attach onto the vehicle and may loosen with use over time. In the case of systems attached to the roof, these systems create wind resistance when the car is moving and are difficult to access. For carrier systems that are attached to bumpers, these systems damage the sensitive bumper mechanism and have limited supportability. For trailer hitch systems, the systems are heavy and difficult to attach, detach, and store.

Additionally, organization and storage space is important for people from all walks of life. Improved organization and storage saves time when preparing for activities. It saves space in a home garage, basement, storage garage or shed, closet, office, home, room or any other place things are stored. It may also help prevent injuries that can occur from tripping, falling, dropping, knocking over unstable items, or other accidental or unintentional actions. Likewise, it may save money because when items fall they may be individually harmed in the form of dents, breaks, chips or other damage or may dent, break, chip, or damage items which they collide with such as motor vehicles.

Accordingly, this invention creates an interface between machine and cargo. It is a modular platform whose universal designs and connections allow simple and easy vehicular transport and storage of multiple types of recreational equipment and activity pods. US6,503,019-B1 discloses a removable adaptor bar device according to the preamble of claim 1, for coupling with and securely transporting a bicycle using a vehicle. The device includes an outer tube and an inner tube retractably received therein. Two sleeves are respectively connected to the outer tube and the inner tube, and two locking plates are respectively connected to the two sleeves. Two hooks are respectively connected to the inner tube and the outer tube so that when the sleeves are pulled, the locking plates are moved away from the hooks so as to hook the seat post and the handlebar stem of a bicycle. Each of the two sleeves are positioned by a resilient member.

### SUMMARY

The above disadvantages can be overcome with the special features of claim 1.

### BRIEF DESCRIPTION OF THE DRAWING(S)

The details of the subject matter set forth herein, both as to its structure and operation, may be apparent by study of the accompanying figures, in which like reference numerals refer to like parts. The components in the figures are not necessarily to scale, emphasis instead being placed upon illustrating the principles of the subject matter. Moreover, all illustrations are intended to convey concepts, where relative sizes, shapes and other detailed attributes may be illustrated schematically rather than literally or precisely.
FIGs. 20-23 show examples of an adaptor bar for use on a bicycle that can be removable, adjustable horizontal support adaptor bars.
FIGs. 24A-24C show examples of bicycle carrying apparatuses.
FIGs. 25A-25F show examples of a lockable clamp for use with a bike seat post.
FIGs. 26A-26H show examples of adaptor bars with removable clamps.
FIGs. 27A-27B show examples of a carrier bar and support system including components for coupling with the rear of a vehicle.
FIGs. 28A-28B show a variety of examples for electrical, magnetic, and electro-magnetic systems or sub-systems can be coupled or integrated with carrier or storage bars.
FIG. 29A shows an example of a trapezoidal mount that is not yet mechanically coupled to an item or carrier bar.
FIG. 29B shows an example of a trapezoidal mount that is not yet mechanically coupled to an item or carrier bar.
FIG. 29C shows an example of a trapezoidal mount that is not yet mechanically coupled to an item or carrier bar.
FIG. 30A shows an example of a top view of a female receiver.
FIG. 30B shows an example of a cross sectional view of a female receiver.
FIG. 31A shows an example of a female receiver clip view from above the receiver area and a side view of a male linking unit mounted on a bar.
FIG. 31B shows an example of a female receiver clip view from above the receiver area and a side view of a male linking unit mounted on a bar.
FIG. 32 shows an example of a carrier bar and various mounting locations for viewing cameras.
FIG. 33 shows a variety of examples of exterior view camera's that can be coupled or integrated with carrier bars and other carrying devices and apparatuses.
FIGs. 34A-34D show example images of safety straps coupled with cargo carrier bars.

### DETAILED DESCRIPTION

Before the present subject matter is described in detail, it is to be understood that this disclosure is not limited to the particular embodiments described, as such may, of course, vary. It is also to be understood that the terminology used herein is for the purpose of describing particular embodiments only, and is not intended to be limiting, since the scope of the present disclosure will be limited only by the appended claims.

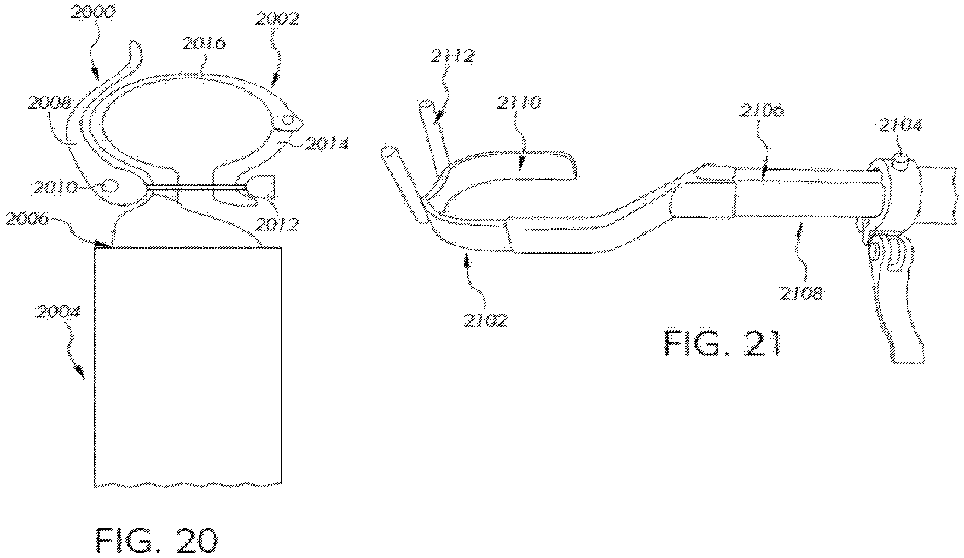

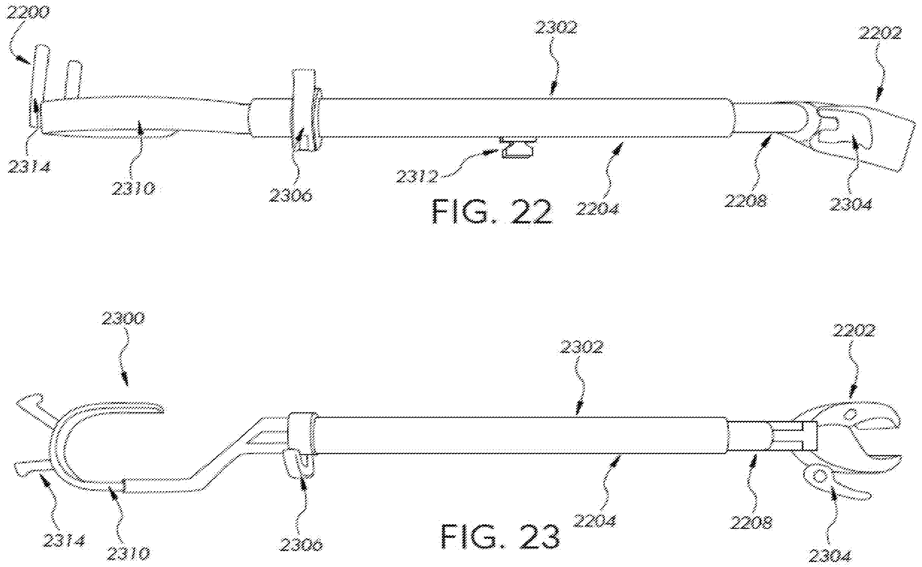

FIGs. 20-21 show end sections and FIGs. 22-23 show a whole adaptor bar for use on a bicycle that can be removable, adjustable horizontal support adaptor bars. Some modern bicycles are constructed in a fashion such that they do not have a horizontal bar between the user's legs extending from below the handlebar area to a vertical bar underneath the bicycle seat. These types of bicycles can have other configurations with a bar such as angled bar extending downward and not directly horizontal. As such, a removable, adjustable horizontal support adaptor bar can be used for such bicycles to provide a location for carrying the bicycle on a carrier bar as described herein using a male/female connection system, also described herein.

As shown in FIG. 20, an example embodiment a posterior end diagram 2000 of an adaptor bar can include a clamp 2002 that is removably or permanently coupled with a bar body 2004. Clamp 2002 can be generally circumferential, such that it can hold a bar of a bicycle in a central hollow location or area. It can include one or more arms 2008 that are releasable and fixable about a pivot 2010 with respect to the clamp, in order to hold the clamp tight. Further, a releasable pin 2012 can be inserted through a hole in a hinged arm 2014, through a hole in clamp body 2016 and extend into a hole near hinge 2010 to secure arm 2008.

In some examples , a hinge (obscured) may or may not be included at a location 2006, such that a clamp can be fixed or moved to a slight angle from a horizontal plane that is parallel with a ground surface in use. This angle can be about 15 degrees from a horizontal plane. It can be various other angles and the hinge may be movable, rotatable using a ball in socket connection, and fixable.

To elaborate, in the example a removable, extendable horizontal support adaptor bar body 2004 is shown. Clasp 2002 is shown at one end of the support bar body 2004, which can be placed around the vertical bicycle seat support bar. This clasp 2002 can be tightened using ratcheting mechanisms, screwing mechanisms, or various other appropriate tightening and securing components. Additionally, an interior surface of the clasp body 2016 and arm 2014 can include rubber or other pliable material which will not cause harm to the vertical bicycle seat support bar and provide a tight seal between the clasp and the vertical support bar. The clasp 2002 can be coupled with a first bar sleeve 2004 by a hinge which allows for rotation about the hinge in a vertical, horizontal, or multiple planes. This hinge can be useful in instances where the vertical bicycle seat support bar is not perpendicular with a flat ground surface and allows the removable, adjustable horizontal support adaptor bar body 2004 to be configured such that it is parallel with a flat ground surface or other desired angle. A lower surface of the first bar sleeve can include a male component as shown in the example embodiment or with a female component in alternate embodiments. Additionally, the first bar sleeve 2004 can include a securing mechanism, on an upper surface of the first bar sleeve. This securing mechanism can be used to secure the first bar sleeve with a male interior bar.

As shown in FIG. 21, an example of an anterior end image 2100 of an adaptor bar can include a hooked arm 2102. As shown in FIG. 21, a notch or groove 2106 can be provided in a male arm 2108 that is coupled with hooked arm 2102 to provide an additional mating surface with a bicycle bar.

In the example , a securing mechanism 2104 is a rotatable screw which can be twisted into place through mated grooves in a screw hole in a first bar sleeve, which can be a female receiver bar sleeve (e.g. 2004 of FIG. 20). In the example , the male interior bar 2108 can have a hook at one end which can be wrapped around a vertical handlebar support post. In various examples, a rubber or other gripping surface can also be provided on the inner surface 2110 of the hook. A hook looping mechanism 2112 can be provided on an upper surface of the hook 2102 and can have the shape of a Texas Longhorn horns or simple upward vertical extensions as shown. These can engage an anteriorly projecting handlebar post. The hook looping mechanism 2112 can provide two locations (one on either side of a handlebar support bar) at which a rubber strap, thread or other securing component (not shown) can be wrapped in order to hold the hook 2102 in place.

FIGs. 22-23 show an adaptor bar device 2302 with a clamp at one end and a hook at the other from a side view image 2200 and top view image 2300, respectively. Similar numbering will be used for each. As shown in the example , a clamp 2202 can have a generally U-shaped, V-shaped, rectangular shaped, irregular shaped, or other shaped interior space that can slip around and be coupled with a bike seat post such that it mates with a bar of the bike seat post. This clamp 2202 can have a securing cam lock 2304 in various embodiments. As such, if a securing cam lock breaks or is otherwise lost, damaged or manipulated, the Adaptor Bar 2302 can still remain coupled to the seat post. Therefore, if the Adaptor Bar 2302 is attached to a bicycle, the bicycle will not fall of the Adaptor Bar 2302 during transportation or storage. The securing cam lock 2304 may operate in similar fashion to other mechanisms with which bike owners are already familiar. Although removable and adjustable in some embodiments, adjustable support Adaptor Bar 2302 is shown in a horizontal orientation and has a square, rectangular, or cylindrical sleeve 2204 and male interior bar 2208 components with a square, rectangular, or circular cross section. Internal and external sleeve components can include a cam lock 2306 to secure the telescoping components in place. These can be removably secured using various tightening mechanisms using pins, screws, turn knobs or others. In should be understood that these could also have triangular or other cross-sectional arrangements in various embodiments. Additionally, in some examples the removable, adjustable horizontal support adaptor bar can be installed in an opposite orientation with a hook mechanism 2310 coupled to a vertical bicycle seat support bar and a clasp mechanism coupled to the vertical handlebar support bar. As shown in FIG. 22, a male attachment 2312 can be removably or permanently coupled with an outer sleeve 2204 in order to allow a bicycle to be safely and securely transported or stored, and/or to safely and securely transport and store items when the bicycle is in use.

FIG. 23 shows an example of a top view of a removable, adjustable horizontal support adaptor bar 23 02. In the example , clasp 2202 can be a quick release mechanism. Although not shown in the example , if provided, a hinge can be clicked and allow pivoting in only one plane thus allowing hook to move up and down to engage handlebars. A male or female coupling piece or mechanism can be located in a most likely center of gravity or mass zone such as nearer to a seat, as shown in FIG. 22 with male attachment 2312. Male interior bar 2208 can include a slat of metal or other material behind hook in order to maintain it in position against vertical bar. In some embodiments, clasps such as clasp 2202 can be used on both ends of the removable, adjustable horizontal adaptor bar 2202. Likewise, in some embodiments hooks 2310 with securing mechanisms 2314 can be used on both ends of the removable, adjustable horizontal adaptor bar 2302 and extend upward in a vertical manner therefrom. Coupling mechanisms 2314 can be plastic, have rubber coverings, rubber inserts, soft synthetic materials, cloth coverings and can provide shock absorption and protection for any bars they may be mounted to. Coupling mechanisms 2314 can be coupled with themselves, each other, or with other structures using straps (not shown) that may have a loop at one or both end and may be oriented around one or more portions of a bicycle in various embodiments.

Coupling mechanisms 2314 can also be attached to the clamp, such that they operate as a double clamp that accepts a male trapezoid coupling mechanism extension to secure the sleeves and secure to a coupling location at same time.

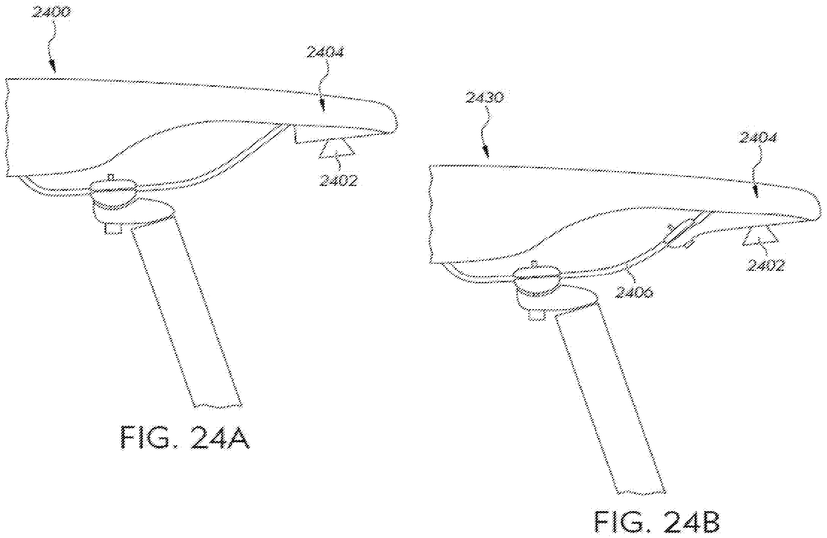

FIGs. 24A-24C show example diagrams 2400, 2430, 2460 of bicycle carrying apparatuses.

As shown in FIG. 24A, a male coupling mechanism 2402 can be permanently or removably coupled or attached directly to the underside of a front end of a bicycle seat 2404 as part of an original manufacture or aftermarket with screwing, bolting, or other mechanisms as appropriate, some with additional mounting plates. Although this is not at the CG (Center of Gravity) of the bicycle, in some embodiments it provides adequate support.

As shown in FIG. 24B, a male coupling mechanism 2402 can be permanently or removably attached and secured to one or two bars 2406 that are common to most bicycle seat 2404 undercarriages and therefore can be added to nearly any bicycle seat 2404. In some embodiments, these can be attached to bars 2406 with a similar clamp to the clamp mechanism attaches to a bike post, or with screwing, bolting, or other mechanisms as appropriate.

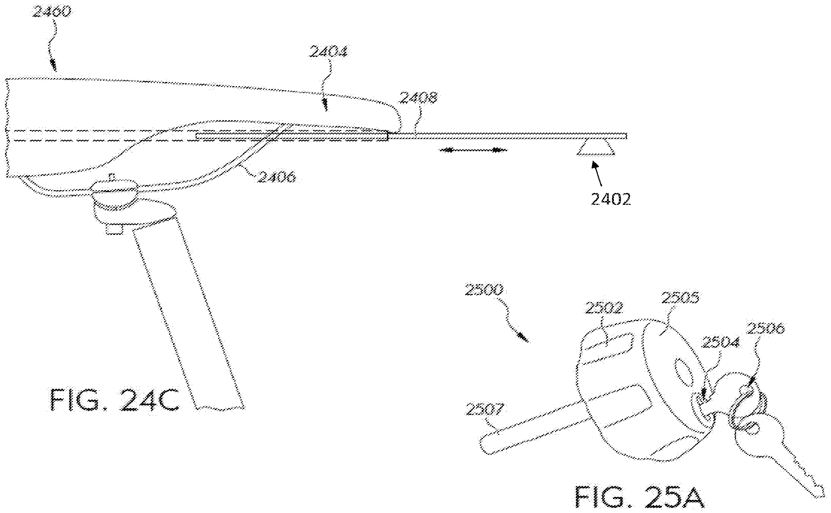

As shown in FIG. 24C, an extension kit can be attached to the underlying support bars 2406 of the seat so that the male trapezoidal mechanism can extend forward through a telescoping or track mechanism 2408 for a distance, in some embodiments about 5 inches, to reach the CG of the bicycle. The mechanism 2408 can then be locked in place with respect to bars 2406 a screw, cam lock or inter digitizing teeth. In some examples, the extension kit can be attached to two under-seat bars 2406, to the main bar, to the front bar, or combinations thereof of a bicycle. In some examples, they can extend the whole length of the bicycle between posts.

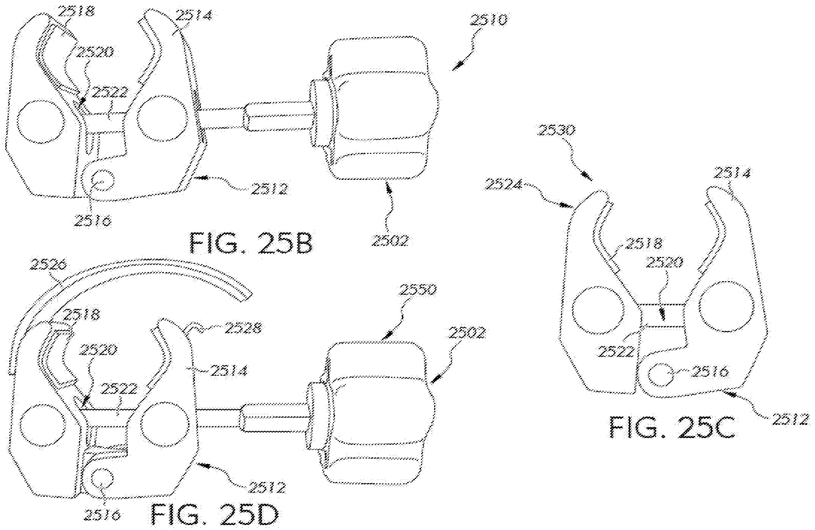

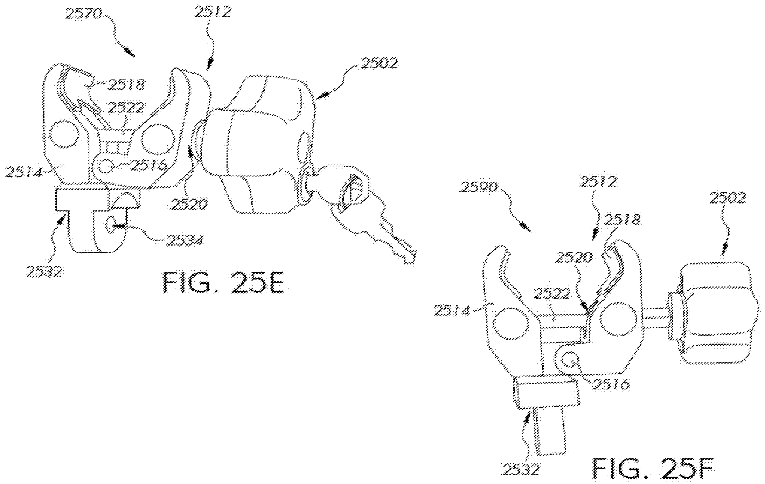

FIGs. 25A-25F show example images 2500, 2510, 2530, 2550, 2570, 2590 of a lockable clamp and knob for use with a bike seat post. Each of FIGs. 25A-25F will be described in turn below but in general, as shown in the example , a lockable clamp that can be coupled with a bicycle seat post can include a keyhole allowing for insertion of a key to lock and unlock the clamp. In various examples, the key can allow for a lockable turn knob having the keyhole and internal components that is coupled with or otherwise built into the clamp to screw together a threaded post with a compatibly threaded hole such that the threads are directed for clamping more quickly than prior art clamps. As such, this configuration of threading can cause opposing arms of a clamp to tighten more quickly than previous clamps. In some examples, this can be twice as fast as previously known with each successive turn of the associated knob.

As shown in FIG. 25A, a knob 2502 can include a keyhole 2504 for securely accessing and using a clamp, locking it in position using a key 2506 and other features. This knob 2502 can include a handle or head piece 2505 with one or more grip promoting features, such as ridges, grooves, textured surfaces, or others. Head piece 2505, can be coupled with a centrally located threaded post 2507 for mating with and securing complementarily threaded holes.

As shown in FIGs. 25B-25F, a clamp 2512 can include one or more movable arms 2514 that are joined at a hinge 2516. Although the hinge 2516 shown is located at an end of each arm 2514, in various examples it can be located at an appropriate location that is not located at an arm end. Each arm 2514 includes can include a gripping section or feature 2518 along an interior surface that can also include one or more features to promote gripping a bicycle or other post. These features 2518 can be rubber or other materials in various examples and can be affixed with one or more adhesives, screws or other attachments. Each arm 2514 may have a gripping feature 2518, shown as pads, or only one may have these features. In examples where each arm 2514 has features 2518, they can be located directly in opposition and facing each other or they can be located at irregular angles with respect to each other. A hole 2520 in one or both of the arms 2514 can be threaded to receive a threaded post 2522. Turning the post 2522, for instance by turning a handle of a knob 2502 that can be coupled with the post, can cause movement of one or both of the arms 2514 towards or away from each other depending on the direction the knob 2502 is turned. In some examples, the knob 2502 and post are removable from one or both of the holes, while in other embodiments, the knob 2502 and post are not removable. In some embodiments, extensions 2524 can be provided at the ends of one or both 2514 arms to lengthen them. In the example two extensions are shown, each about 0.5 millimeters long.

As shown in FIGs. 25B-25F, the threaded post 2522 can have differently oriented threads at a distal and proximal location along its length in some embodiments. It should be understood that complementary oriented threading is to be used in order for operability in each arm 2514. This can provide the enhanced speed affect when turning the knob 2502 in various embodiments. In some embodiments, the knob 2502 can be removable from the post.

As shown in FIG. 25D, some examples can include a safety strap, arm, or extension 2526 that is coupled with one or more clamp arms 2514. In some examples, this extension 2526 can be removable while in others it can be permanently affixed to one arm 2514. A secondary clasp 2528 can be used to secure the strap, arm, or extension 2526 to the second clasp arm 2528 in some examples, while in others it can be secured directly to the second arm 2514. The strap arm or extension 2526 can be independently adjusted in some examples, while in others its movement may be dependent on that of an arm 2514 it is affixed to or dependent on movement of the knob 2502 and threaded post 2522.

FIGs. 25E-25F shows an example of two removal and lockable clasps 2512. As shown in the example a permanent or detachable back end piece 2532 can be attached near a hinge 2516 on a side opposite the area between arms 2514 and can include a hole or holes 2534 that can be threaded or otherwise coupleable to other features in various embodiments.

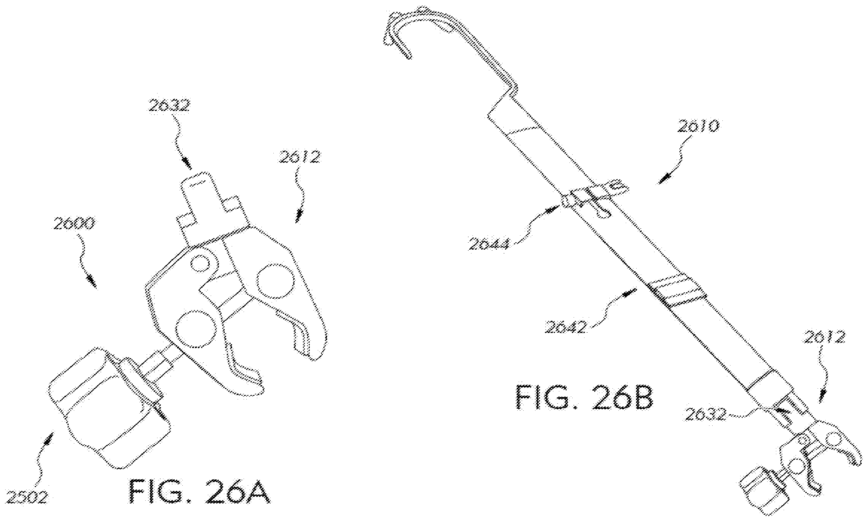

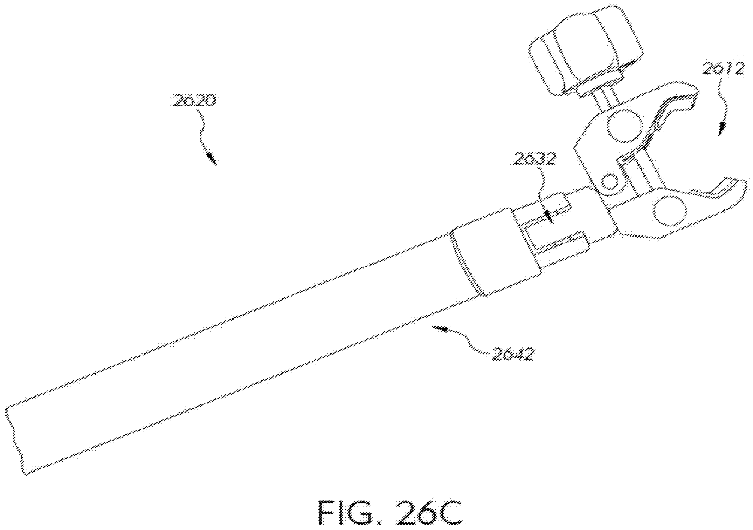

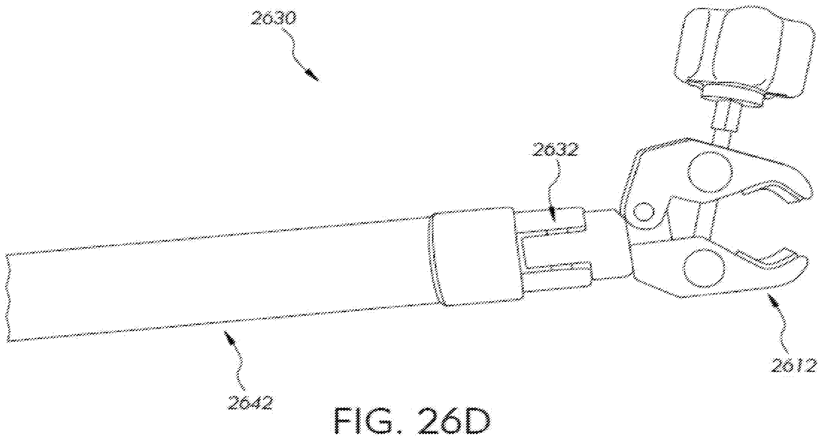

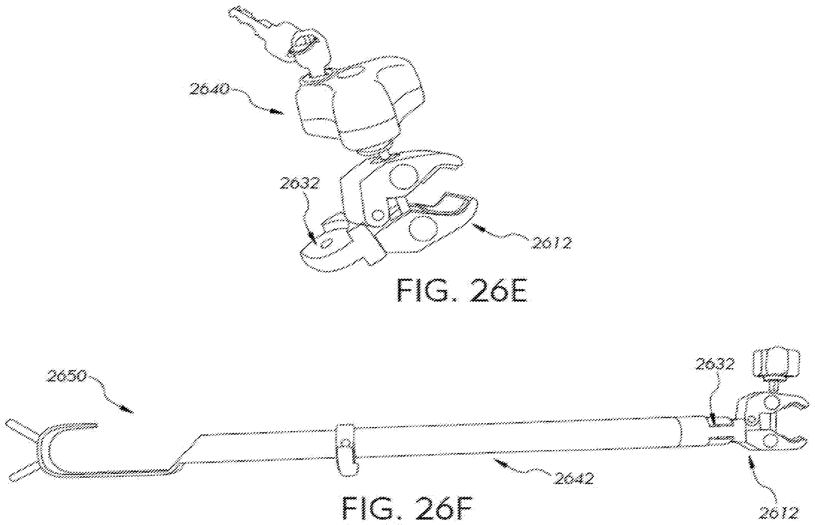

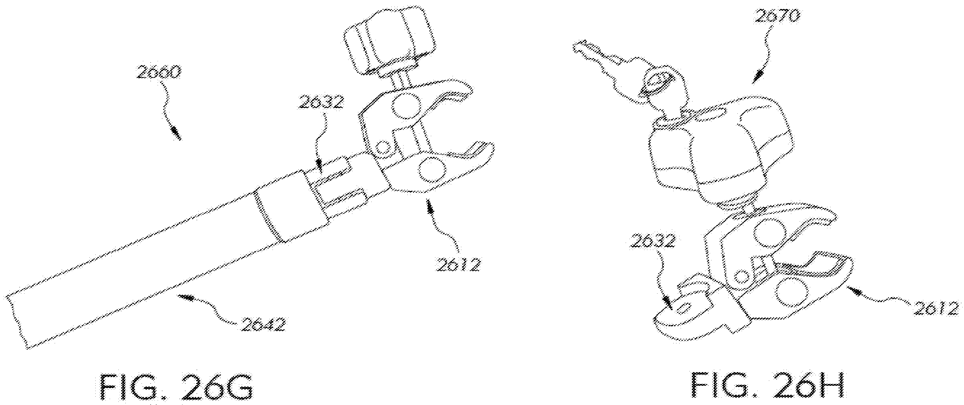

FIGs. 26A-26H show examples of adaptor bars with removable clamps 2600, 2610, 2620, 2630, 2640, 2650, 2660, 2670. As shown in the example embodiment, the clamp 2612 can be used to secure adaptor bars 2642 (e.g. 2302 of FIGs. 22-23) at one or both ends to bicycle posts by securing the clamp 2612 that encircles part or all of a seat post or handlebar post. As described herein, the securing mechanism 2644 that secures the two telescopic tubes of the adaptor bar can be a screw mechanism, or a cam lock mechanism.

As shown in the example a permanent or detachable back end piece 2632 can be attached include a hole or holes 2634 that can be threaded or otherwise coupleable to other features in various embodiments. Here, they are used to allow a bar (obscured) to secure back end piece 2632 to an end of adaptor bar 2642 in a space between two extensions of the bar that each have holes or locations to secure the bar.

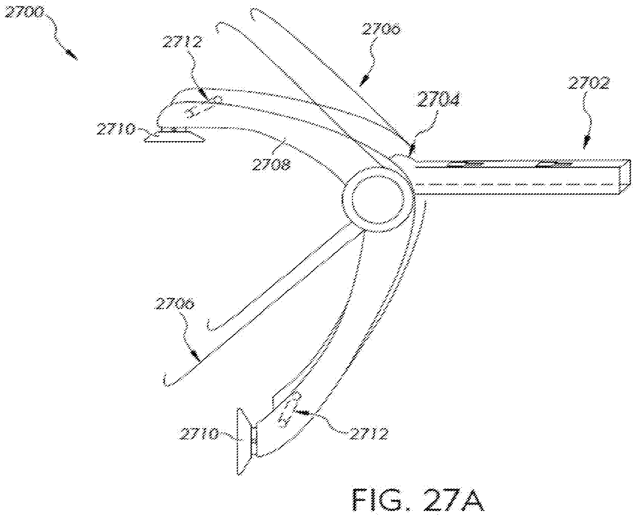

FIGs. 27A-27B show example diagrams 2700 and 2750 of a carrier bar and support system, including components for coupling with the rear of a vehicle, from a side view and front view, respectively. Included are one or more carrier bars 2702 having carrier components that can have a substantially horizontal orientation in a carrying orientation. These bars 2702 can be removably or permanently coupled with one or more posts 2704 perpendicularly oriented in a generally horizontal direction parallel to a ground surface. Also included are one or more retaining straps 2706 that can be strapped to or around a trunk lid that are coupled to the perpendicularly oriented post or bar 2704. Additionally, one or more arms 2708 can be coupled to the perpendicular oriented bar 2704 that can rest on or be coupled with a rear or upper surface of a trunk lid, or both. These couplings can be mechanisms 2710, such as suction cups-like, and can be secured in place by a manual suction cup near the end of each arm. In some embodiments, secondary bars or straps 2712 can couple bars together for added securing.

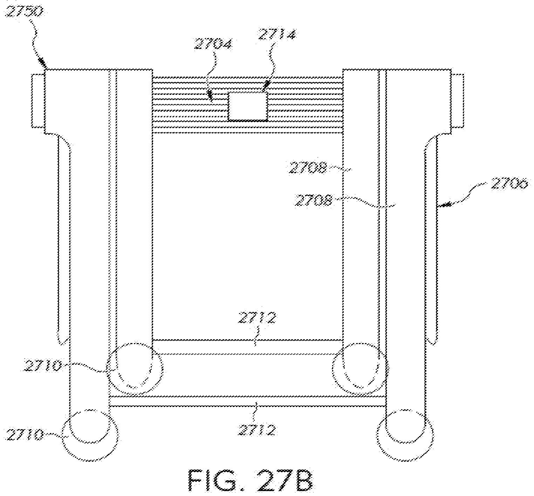

As shown in FIG. 27B, a storage orientation can allow for removal and decoupling of the one or more carrier bars from a slot 2714 and arms 2708 can lie flat with respect to each other.

It should be understood that as described in herein, a transitional carrier bar or portion of the bar, having a female or male trapezoidal mounting can be attached to or otherwise coupled with an adaptor that is affixed or removably coupled with a vehicle or in a fixed location. These can include attachment of the transitional carrier bar to a tow hitch, a roof rack, a trunk rack, any other rack or surface appropriate to attach the transitional carrier bar. In some embodiments, trunk racks may require straps or other secondary components. In some examples, these may be inside a trunk, particularly for smaller sized examples. Likewise, it should be understood that female or male trapezoidal mountings can be directly or indirectly coupled with various existing rack systems and other surfaces using appropriate coupling means as described herein or later developed.

In some examples, receiving holes in a rear surface of a trunk lid can be standardized for a standard receiver unit and may accept and engage a primary carrier bar. One or more of these holes can be covered with standardized automaker emblems that are pre-configured to attach to a standardized opening mechanism.

A receiver unit can also be stabilized internally by a variety of laterally, vertically and anteriorly directed support bars that have been tailored or customized to one of a variety of different trunk lid shape, size and configuration. This can be similar to the tailoring of different cargo support bars for various vehicles that are produced to attach standardized tow hitches to a variety of motor vehicles.

In some examples, a primary carrier bar inserted into a receiver mechanism can be automatically locked with a latch type mechanism, similar to those found in vehicle doors, either remotely or locally. These springing latches can be part of a receiver unit (on an inferior side of the receiving unit) and may spring into a receiver unit opening. When a primary carrier bar is inserted, it may push the latch outward. Then, when the latch contacts the inferiorly oriented opening in the carrier bar, it can spring into the hole and secure the carrier bar in place. The latch can later be released automatically or manually by opening a locked trunk lid and manually or automatically releasing it using an appropriate release mechanism.

In some examples, carrier bars can be coupled with the front or rear surfaces of buses or other vehicles and can include hinges, such that they can be rotated outward from a flush position. In some embodiments, receiver units can be easily attached to a rear surface of car, pickup or other truck, sport utility vehicle, all-terrain vehicle (ATV), recreational vehicle (RV), motorcycle, boat, or other vehicle, such as using a plurality of bolts (e.g. with four bolts), in an aesthetically pleasing manner. In some embodiments, carrier bars, adaptor bars or storage bars can telescope, be hinged in a double hinge or provide other convenient storage operability for users.

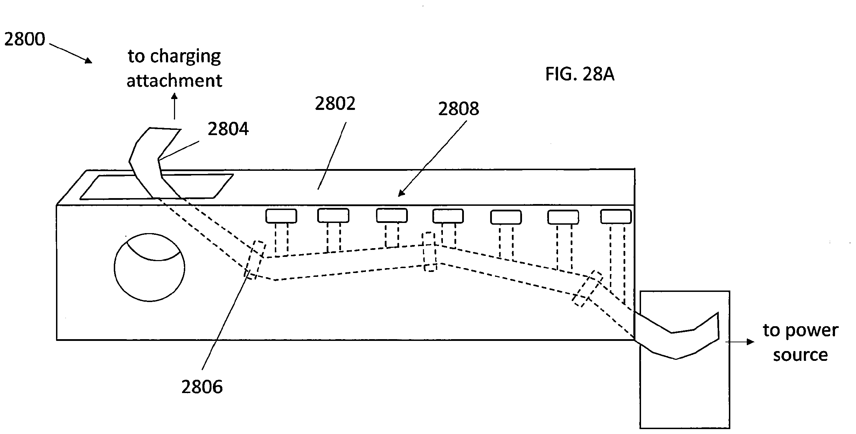

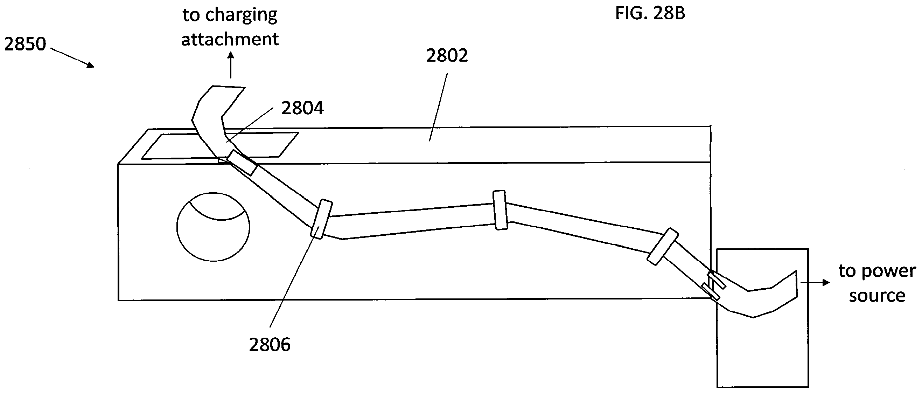

FIGs. 28-31 show a variety of examples for electrical, magnetic, and electro-magnetic systems or sub-systems can be coupled or integrated with carrier or storage bars and also with any associated trapezoidal or other shaped mounts, as appropriate. As such, electrical, magnetic, and electro-magnetic systems or sub-systems can be aftermarket or off-the shelf preinstalled. These systems or subsystems can be installed by users or manufacturers on a variety of existing and later developed storage or carrier racks, bars, devices, apparatuses, and the like. They can power individual locations or parts of these devices, or the devices as a whole. In general, they can be used to power or charge batteries for electrical bicycles, wheelchairs, scooters, grill plates, refrigeration units, lights, sound systems with speakers, televisions, computers, or any of a variety of other electrically powered vehicles or items. Power for these systems can be provided by or drawn from a vehicle's or a building's normal electrical system, from independent batteries, or in other appropriate manners. As such, appropriate wiring and any associated coupling mechanisms are contemplated. These electrical systems can be removable or permanent in various embodiments.

In some examples, wireless or cordless electrical charging systems can provide charging by induction. Those in the art will understand that separate electrical coils can provide charging wirelessly by powering one of the coils and moving the other within its proximity in a correct orientation.

FIG. 28A shows an example 2800 of a carrier bar 2802 with internal electrical wiring system. As shown in the example embodiment in some of these electrical systems, wiring 2804 can be provided directly through the body of a carrier bar 2802 and subsequently through a trapezoidal or other shaped mechanical mount. Here, an electrical wire 2804 is shown as threaded through a hollow interior of a carrier bar, which can then be threaded through additional carrier or storage bars or racks or sections thereof. The solid portions of the wire are shown outside of the body of the carrier bar and the dashed sections are internal to the carrier bar. In various embodiments, wiring can be removably or permanently coupled to internal carrier bar surfaces using adhesives, clips, or other mechanisms 2806. As shown, one or more charging ports 2608 can be provided on one or more surfaces of the carrier bar and electrically coupled to a power source. These can be any of a variety of types of receivers, aside from the USB type ports shown. These could also be plugs in some embodiments, while some embodiments can have both plugs and receivers. A plug or receiver can also allow a charging attachment to be coupled to the power source, such as a mounting attachment or receiver, which may be trapezoidal in cross-sectional shape. A variety of coupling mechanisms are also shown with dashed outlines to indicate that they are internal to the bar. In some embodiments, integrated loops can be provided on or in the carrier bars to thread wiring through, which are slightly larger than the exterior dimensions of the wires.

As such, the mount itself provides the electrical charging ability when it is coupled to a contemplated component and power is turned on. In some embodiments, separate wiring and plug couplings can be provided, such that the mount itself does not provide the electrical charging. This electrical wiring associated with the carrier bar can require one or more electrical contact points or connections that automatically couple the automobile or other vehicle or wall mounting with the carrier bar when the carrier bar is mounted. Connection mechanisms can be permanently exposed, pulled out when needed and stored safely when not, or covered by one or more movable latches or doors. Connection mechanisms contemplated include standard connection mechanisms currently known and those that are later developed. In some embodiments, specialized wiring and connection mechanisms can be included.

As shown in FIG. 28B an example diagram 2850 can include wiring 2804 that can be permanently or removably coupled with carrier bar 2802 at external surfaces using adhesives, clips, or other mechanisms 2806. Wiring 2804 can be removably coupled with a vehicle or wall mount's electrical power at an appropriate location and with an appropriate coupling mechanism.

In examples where carrier bars include batteries rather than drawing power from a vehicle or wall mount's electrical system, batteries can be removably or permanently coupled inside or outside a carrier bar in an appropriate location. This can include a covered or otherwise protected chamber or box.

It is contemplated that a variety of different types of charging mechanisms may be required different in different examples, to account for different power tolerances and other distinctions between different types or models of electrical items to be charged. As such, any number of converters, transformers or other components are contemplated for inclusion in the electrical system.

In some examples, on and off switches, different gauges, lighting, and even displays can be provided to indicate the status of charging mechanisms. Timers and automatic features, such as turning off a charging mechanism, can be provided by one or more small computing devices that use one or more processors to execute instructions stored in non-transitory computer readable memory. Other features such as lighting, audio speakers, and others are also contemplated. For example, a hardwired light can be provided in some embodiments that indicates braking or other vehicle conditions.

In some examples, multiple charging mechanisms can be included for a carrier bar. As such, multiple electrical items can be charged. In some examples, these can be independent, while in others, they can be interdependent and function together as an integrated system.

For electrical mountings provided on an electrical item to be carried or supported by a carrier bar, a male or female trapezoidal or other shaped mount can be removably or permanently coupled to the item. This can in turn be removably or permanently electrically coupled to the battery of the item.

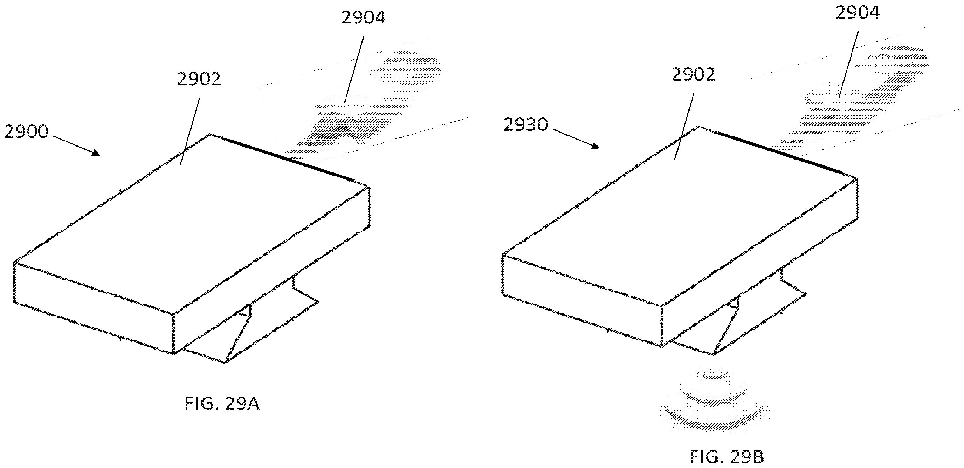

FIG. 29A shows an example diagram 2900 of a trapezoidal mount 2902 that is not yet mechanically coupled to an item or carrier bar. As shown, a plug 2904 can be provided that powers the mount when plugged in. This can be directly or indirectly coupled with the mount, which may have an internal storage chamber. Here, the mount itself can have one or more electrical connections, such as pads or pins, to provide power from or to the mount when electrically coupled.

FIG. 29B shows an example diagram 2930 of a trapezoidal mount 2902 that is not yet mechanically coupled to an item or carrier bar. As shown, a plug 2904 can be provided that powers the mount when plugged in. Here, the mount itself can provide or receive power wirelessly, through induction from or to the mount when electrically coupled.

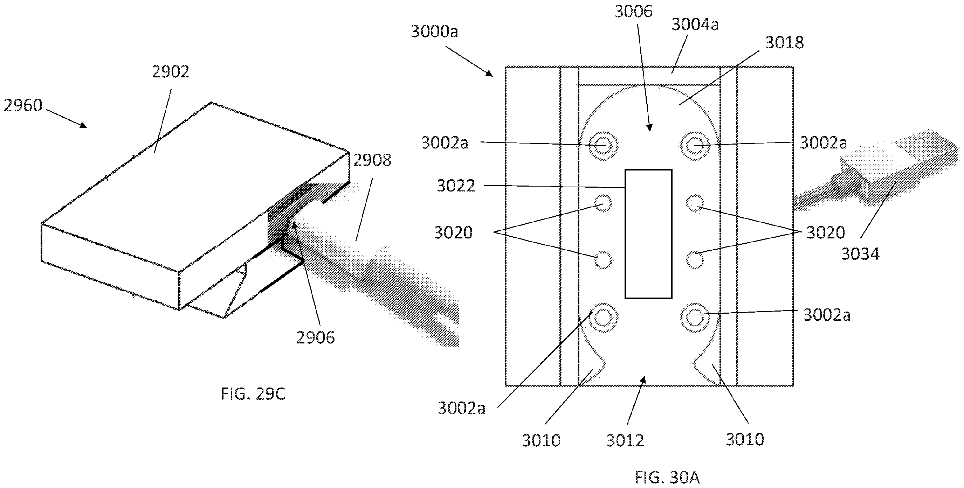

FIG. 29C shows an example diagram 2960 of a trapezoidal mount 2902 that is not yet mechanically coupled to an item or carrier bar. As shown, a port 2906 can be provided that powers the mount when a power cable 2908 is plugged into it. This port 2906 can be provided on or in one or more surfaces of the mount to provide wired or wireless power.

FIG. 30A shows an example of a top view of a female receiver 3000a. In the example embodiment four main screw holes 3002a are shown as well as four minor screw holes 3020 with different diameters and features. All eight holes 3002a and 3020 can be used in some embodiments where a more secure hold is desired. Any combination of holes might be used in various embodiments, with different numbers of holes as well. In some embodiments, small grooves between the holes could be placed to allow the passage of thread or wire to secure objects to these female trapezoid clips 3000a or to charge a battery. In the example embodiment, a charging pad surface 3022 can provide or receive electrical power to or from a plug 3034, while in some embodiments, ports can be provided.

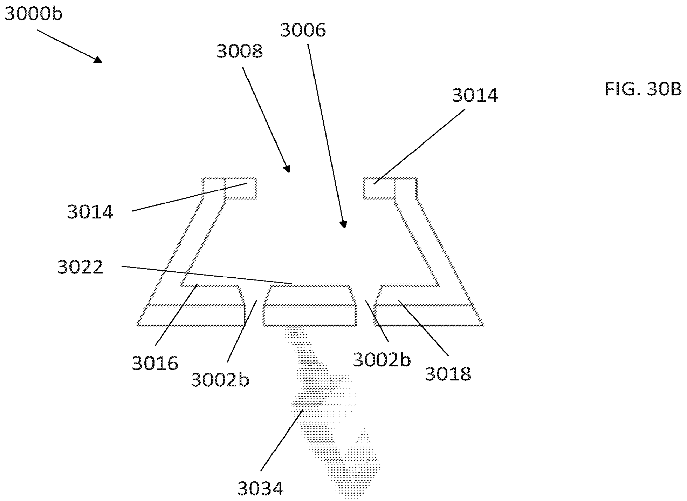

FIG. 30B shows an example of a cross sectional view of a female receiver 3000b. In the example, the trapezoidal female section channel 3006 is shown which receives a complementary male piece. The trapezoidal female section channel 3006 has overhangs 3014 which create a channel 3008 for securing the male portion in place and preventing it from rocking or swaying. Also shown are screw hole channels 3002 with flared top sections such that the top of the screw heads can lie flush with an upper surface 3016 of the bottom section 3018 of the female receiver 3000b. In the example , a charging pad surface 3022 can provide or receive electrical power to or from a plug 3034, while in some embodiments, ports can be provided

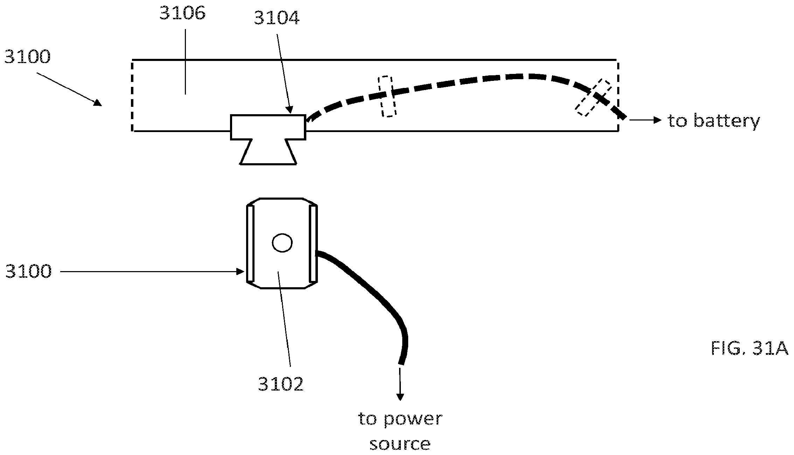

FIG. 31A shows an example of a female receiver clip 3100 view from above the receiver area 3102 and a side view of a male linking unit 3104 mounted on a bar 3106. In some examples an attachment for a male trapezoid 3104 mounted, for instance by welding to a bar 3106 can create a smooth, contoured or otherwise ergonomic surface by coupling it with the male trapezoid so that a user can carry at the welding location easily. In the example , electrical wiring is shown with a dashed line as being internal within the bar, which connects the mount to a battery. This can be held in place by one or more coupling mechanisms. Also shown is wiring connected to the receiver that can provide power. As such, when electrically and mechanically coupled, the receiver and the mount can be used to power a battery, for instance an electric bicycle battery.

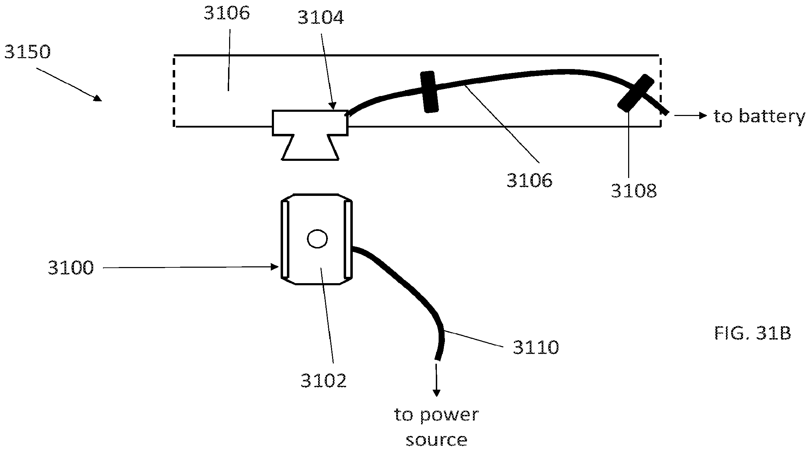

FIG. 31B shows an example of a female receiver clip 3100 view from above the receiver area 3102 and a side view of a male linking unit 3104 mounted on a bar 3106. In some embodiments an attachment for a male trapezoid 3104 mounted, for instance by welding to a bar 3106 can create a smooth, contoured or otherwise ergonomic surface by coupling it with the male trapezoid 3104 so that a user can carry at the welding location easily. In the example embodiment, electrical wiring 3106 is shown with a solid line as being external on the bar, which connects the mount to a battery. This can be held in place by one or more coupling mechanisms 3108. Also shown is wiring 3106 connected to the receiver that can provide power. As such, when electrically and mechanically coupled, the receiver 3102 can receive power from the mount 3104 that can be used to power a battery via a wire 3110, for instance an electric bicycle battery.

As stated previously, magnetic coupling mechanisms are also contemplated. These can include one or more north, south, or both poles on an item to be carried or supported and one or more north, south, or both poles on a carrier bar. As such, an improved coupling can be provided than in systems without magnets. Electro-magnetic and magnetic couplings can be provided without mechanical couplings or as an added coupling mechanism in addition to mechanical couplings. Where electro-magnetic coupling mechanisms are included, when powered they can provide improved coupling, while when not powered they do not. Thus, they can be simply removed by undoing any mechanical coupling mechanisms when power is off.

Magnets or electro-magnets can be coupled directly to an exterior surface of a carrier bar or coupling mechanism on an item to be carried. In others, magnets can be stored in a removable or permanent compartment at or near a surface of each. This can be in an internal housing that is integrated or coupled with a carrier bar or item. Adhesives or other coupling mechanisms are contemplated.

Additionally, programmable magnets, coded magnets, printed polarity polymagnets, and a variety of other associated magnets and electromagnets are also contemplated. These can provide different types of magnetic fields from conventional magnets. In particular, numerous north and south poles can be provided on a single surface or face. They may have long, medium, or tight reaching fields. As such, they can be used as a "spring" to create a latch by turning about an axis. They can also be used to create gears. Further, the fields can be programmed as "attractrepel" types of magnets such that they attract at a certain distance and then repel once they are close enough together to create a hovering effect. The opposite is also possible to create a "repelattract" type, where two magnets generally repel until moved close enough together, where they then attract. Also contemplated are magnetic pixels or maxils. These can be used to create tracks or other designs.

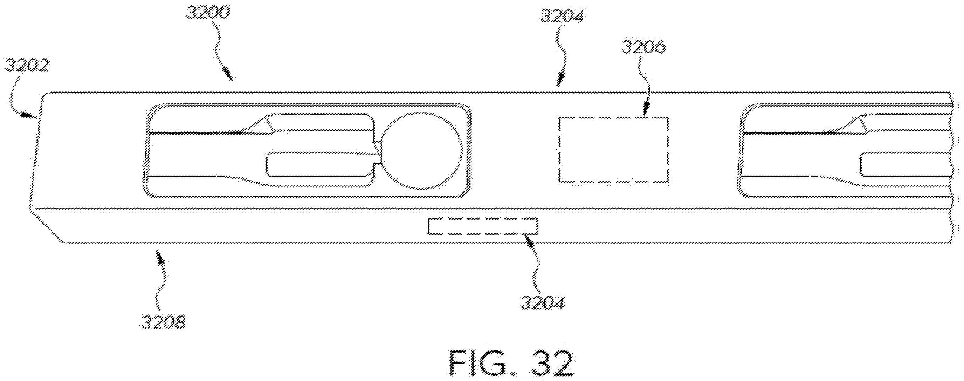

FIG. 32 shows an example diagram 3200 of a carrier bar and various mounting locations for viewing cameras. In many examples carrier bars, carrier racks, and other carrying apparatuses and devices for use in transporting items using vehicles can include digital video cameras. These cameras can be communicatively coupled by wires or wirelessly to one or more user interface displays, head's up displays, monitors, or other viewing devices within the interior of the car. As such, drivers, passengers, or both can view locations outside the vehicle when turned on. These camera and display systems can reduce or eliminate the chances of reversing into other cars, trees, and other moving or stationary obstacles, in addition to reducing or eliminating the risk of running over children, people, animals, or objects, and others.

As shown in the example, one or more cameras can be removably or permanently coupled with a carrier bar or other device or apparatus at a distal end surface 3202 that points away from the body of the vehicle. They can also be mounted in locations 3208 below carrier bars. Further, they can be mounted at side locations 3204. In some examples, they can be mounted at upper surface locations 3206 of the carrier bar. For upper surface locations, they may be elevated above the bar such that they are operable to view over any items that may be coupled for carrying. Some examples include a view proximally, toward the vehicle, so as to see the rear of the vehicle or even under the bumper. In some embodiments, they can allow for upward viewing of objects placed above them.

Those in the art will understand that cameras can have a variety of removable or permanent mounting means, which can include adhesives and glues; mechanical coupling means such as screws, nuts, bolts, washers, nails; welds; and others or can be integrated with the body of the carrier bar or other device. Imaging provided by these cameras can be high definition or at least provide an adequate amount of resolution so as to visually capture, process, and provide adequate output for display on a video monitor within the car. In some examples, they can have movable lenses that are controllable from within the car. In some examples, these movable lenses can automatically move to capture motion, based on visual detection algorithms stored in non-transitory memory.

Further, these cameras may include zoom functionality. In some, examples, they can pan, swivel, rotate, tilt, or otherwise adjust a viewing angle. In some, examples they may be wired into the vehicle's electrical system or be removably coupled therewith. In some examples, they can include fish-eye lenses, flat lenses, or other types of lenses and also filters, for example, for night driving. For wireless examples, local or other networking capabilities should be included, as appropriate, as well as any power sources or other requirements. Radar, Lidar, and other wireless sensing technology can also be used to monitor, measure, and capture distances to objects, which may then cause displays or vehicle audio or other visual systems to alert the driver of any hazards in the direction being monitored. In some, examples visual data or images can be captured and stored in memory, either when an event occurs, within a specific amount of time, when activated, automatically, manually, or based on other criteria. This can be stored locally or transmitted to a remote location via a direct or indirect communicative coupling with a communications or computer network.

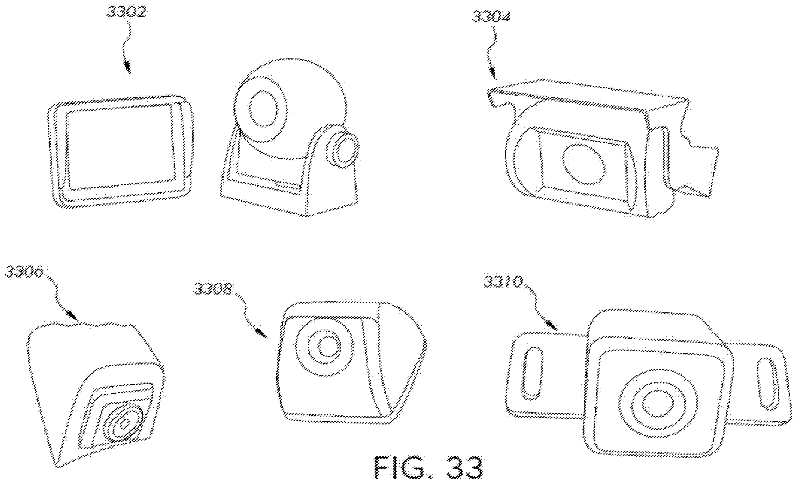

FIG. 33 shows a variety of examples 3302, 3304, 3306, 3308, 3310 of exterior view camera's that can be coupled or integrated with carrier bars and other carrying devices and apparatuses. These can include many mechanical and electrical additional accessories, include lighting, protective housings, movement, coupling means, and others.

Additionally, it should be understood that cameras for use with carrier bars should comply with any current or later developed local or federal regulations, based on the country and locality they are to be used in. For example, in the United States, these regulations can include any regulations put out by the National Highway Traffic Safety Administration (NHTSA) or other governing or administrative body. For the NHTSA, this can include the Federal Motor Safety Vehicle Standards for Rear (or other) Visibility. One example is the FMVSS 111 standards. As such, field of view, image size, test procedures, linger time, deactivation, backing event monitoring, image response time, display luminescence, durability, phase in standards, and various other aspects of use and implementation may be required.

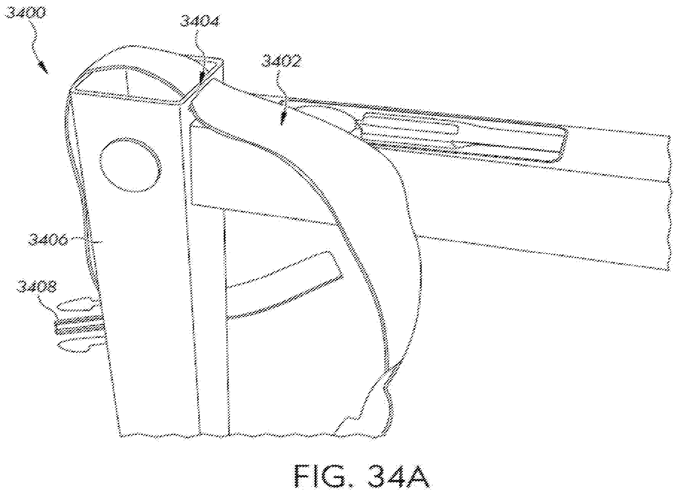

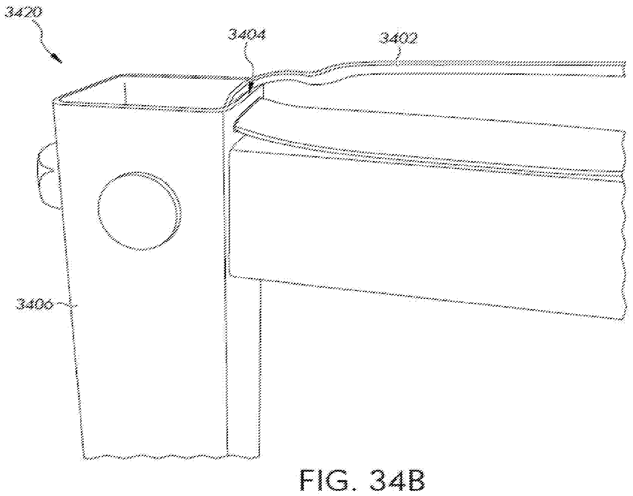

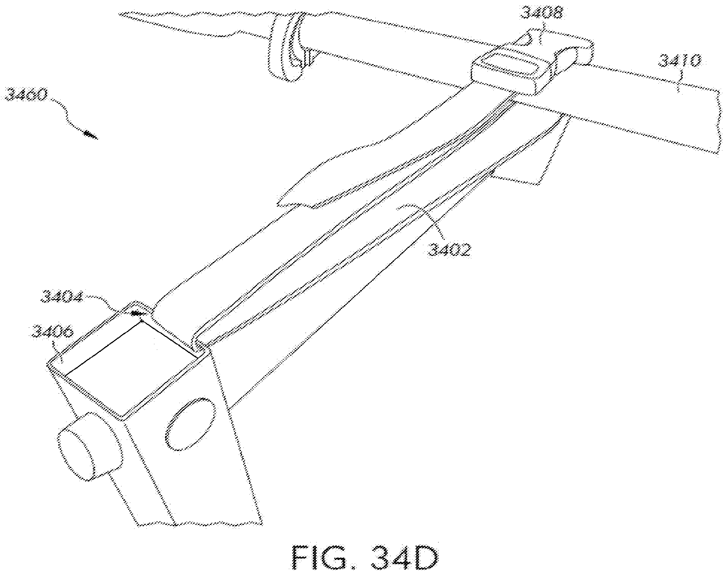

FIGs. 34A-34D show example images 3400, 3420, 3440, and 3460 of safety straps coupled with cargo carrier bars. As shown, one or more straps 3402, bands, or devices having similar properties such as free movement can be provided as a backup safety measure for transportation of items using carrier systems or bars 3406. In general, straps 3402 can be a strip or length of fabric, rubber, plastic, or other materials and can include one or more removable or permanent buckles 3408 at or near one or both ends of strap 3402, such that the ends can be securely fastened to each other using the buckle 3408.

Further shown in the example one or more holes or slots 3404 through one or more walls of carrier bar 3406. Slots 3404 can generally be sized such that it allows strap 3402 to be passed through and looped out of an interior of, or otherwise coupled with, carrier bar 3406.

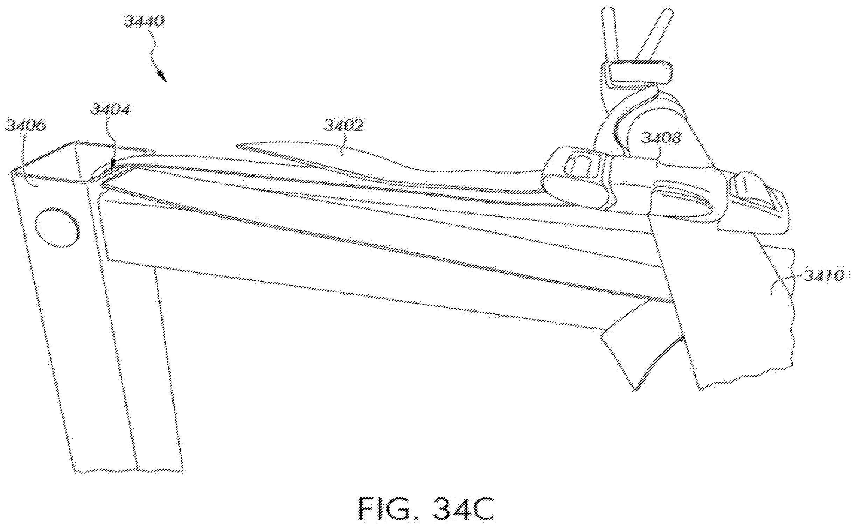

As shown in FIGs. 34C-34D, when in use for carrying or transporting an item such as an adaptor bar 3410 (e.g. see FIGs. 20-23 and 26A-26H), bicycle bar, or other item, strap 3402 can be looped at least around the bar 3410 and buckle 3408 can be secured and tightened if necessary. This can provide an additional measure of safety, by which a taut or otherwise secured strap 3402 holds bar 3410 in place and prevents it from moving back and forth. Additionally, if bar 3410 were to jostle or otherwise come free of carrier bar system 3406, strap 3402 would still be looped around it, thus preventing adaptor bar 3410 from completely falling free and potentially injuring persons or property which may be following a vehicle equipped with carrier bar system 3406. It should be understood that multiple loops and different orientations of strap 3402 can be provided in various examples , as well as additional safety features such as slits, slots, or holes through adaptor bar 3410, different sections of carrier bar 3406, and others.

As used herein and in the appended claims, the singular forms "a", "an", and "the" include plural referents unless the context clearly dictates otherwise.

In many instances entities are described herein as being coupled to other entities. It should be understood that the terms "coupled" and "connected" (or any of their forms) are used interchangeably herein and, in both cases, are generic to the direct coupling of two entities (without any non-negligible (e.g., parasitic) intervening entities) and the indirect coupling of two entities (with one or more non-negligible intervening entities). Where entities are shown as being directly coupled together, or described as coupled together without description of any intervening entity, it should be understood that those entities can be indirectly coupled together as well unless the context clearly dictates otherwise.

## Claims

1. A removable adaptor bar device (2302) for coupling with and securely transporting a bicycle using a vehicle, comprising: an outer sleeve; an inner sleeve (2208), operable to slidably engage with the outer sleeve (2204) ; an adjustable clamp (2206) for securing the outer and inner sleeves in a fixed position with respect to each other; a first engagement mechanism (2310) coupled with an end of the outer sleeve; a second engagement mechanism (2202) coupled with an end of the inner sleeve and opposite the first engagement mechanism; wherein the first and second engagement mechanisms are operable to couple with a seating post of a bicycle and a post near handlebars of the bicycle for securing the bicycle during transportation or storage **characterised in that** the removable adaptor bar device further comprises a primary coupling mechanism (2314) for coupling with a complementary coupling mechanism of a transportation or storage apparatus,
wherein the primary coupling mechanism is a male engagement piece that is operable to engage with a female engagement receiver for storage and transportation of the adaptor bar and wherein the male engagement piece has a trapezoidal cross section.

2. The removable adaptor bar device (2302) for coupling with and securely transporting a bicycle using a vehicle of claim 1, wherein the first engagement mechanism (2310) is a hook (2102).

3. The removable adaptor bar device (2302) for coupling with and securely transporting a bicycle using a vehicle of claim 2, further comprising: a first secondary coupling mechanism (2112) coupled to the hook (2102).

4. The removable adaptor bar device (2302) for coupling with and securely transporting a bicycle using a vehicle of claim 3, further comprising: a second secondary coupling mechanism coupled to the hook (2102), wherein the first secondary coupling mechanism is coupled with the second secondary coupling mechanism using a strap.

5. The removable adaptor bar device (2302) for coupling with and securely transporting a bicycle using a vehicle of claim 1, wherein the second engagement mechanism is a clamp.

6. The removable adaptor bar device (2302) for coupling with and securely transporting a bicycle using a vehicle of claim 5, wherein the clamp comprises: a first arm and a second arm that are oriented in opposing positions and are operable to removably and securely grasp a bicycle bar.

7. The removable adaptor bar device for coupling with and securely transporting a bicycle using a vehicle of claim 6, wherein the clamp further comprises: a cam locking mechanism.

8. The removable adaptor bar device for coupling with and securely transporting a bicycle using a vehicle of claim 7, wherein the first arm of the clamp further comprises: a first threaded hole through the first arm that is operable to receive a threaded post to articulate the first and second arms with respect to each other.

9. The removable adaptor bar device for coupling with and securely transporting a bicycle using a vehicle of claim 8, wherein the second arm of the clamp further comprises: a second threaded hole through the second arm that is operable to receive a threaded post to articulate the first and second arms with respect to each other.

10. The removable adaptor bar device for coupling with and securely transporting a bicycle using a vehicle of claim 9, wherein the first and second threaded holes have opposite orientations and wherein the threaded post has two sections with opposite orientations.

11. The removable adaptor bar device for coupling with and securely transporting a bicycle using a vehicle of claim 6, wherein the clamp further comprises: an end piece located near a hinge between the first and second arms that is operable to removably couple the clamp with the end of the inner sleeve.

12. The removable adaptor bar device for coupling with and securely transporting a bicycle using a vehicle of claim 6, wherein the clamp further comprises: a first gripping surface on an inward facing side of the first arm; and a second gripping surface on an inward facing side of the second arm.

13. The removable adaptor bar device for coupling with and securely transporting a bicycle using a vehicle of claim 6, wherein the clamp further comprises: a clamp coupling feature that is coupled to the first arm; and a strap, coupled to the second arm that is operable to be coupled with the clamp coupling feature around a bar of the bicycle.

## Patentansprüche

1. Eine abnehmbare Adapterstangenvorrichtung (2302) zum Koppeln mit und zum sicheren Transportieren von einem Fahrrad unter Verwendung eines Fahrzeugs, beinhaltend: eine äußere Hülse; eine innere Hülse (2208), die betriebsfähig ist, um verschiebbar mit der äußeren Hülse (2204) in Eingriff zu kommen; eine verstellbare Schelle (2206) zum Befestigen der äußeren und der inneren Hülse in einer feststehenden Stellung in Bezug aufeinander; einen ersten Eingriffsmechanismus (2310), der mit einem Ende der äußeren Hülse gekoppelt ist; einen zweiten Eingriffsmechanismus (2202), der mit einem Ende der inneren Hülse gekoppelt ist und dem ersten Eingriffsmechanismus gegenüberliegt; wobei der erste und der zweite Eingriffsmechanismus betriebsfähig sind, um mit einer Sattelstütze eines Fahrrads und einer Stütze nahe einer Lenkstange des Fahrrads gekoppelt zu werden, um das Fahrrad während Transport oder Aufbewahrung zu befestigen, **dadurch gekennzeichnet, dass** die abnehmbare Adapterstangenvorrichtung ferner einen Primärkopplungsmechanismus (2314) zum Koppeln mit einem komplementären Kopplungsmechanismus einer Transport- oder Aufbewahrungsvorrichtung beinhaltet, wobei es sich bei dem Primärkopplungsmechanismus um ein Steckeingriffsstück handelt, das betriebsfähig ist, um zu Aufbewahrung und Transport der Adapterstange mit einer Aufnahmeeingriffsbuchse in Eingriff zu kommen, und wobei das Steckeingriffsstück einen trapezförmigen Querschnitt aufweist.

2. Abnehmbare Adapterstangenvorrichtung (2302) zum Koppeln mit und sicheren Transportieren von einem Fahrrad unter Verwendung eines Fahrzeugs gemäß Anspruch 1, wobei es sich bei dem ersten Eingriffsmechanismus (2310) um einen Haken (2102) handelt.

3. Abnehmbare Adapterstangenvorrichtung (2302) zum Koppeln mit und zum sicheren Transportieren von einem Fahrrad unter Verwendung eines Fahrzeugs gemäß Anspruch 2, ferner beinhaltend: einen ersten Sekundärkopplungsmechanismus (2112), der an den Haken (2102) gekoppelt ist.

4. Abnehmbare Adapterstangenvorrichtung (2302) zum Koppeln mit und zum sicheren Transportieren von einem Fahrrad unter Verwendung eines Fahrzeugs gemäß Anspruch 3, ferner beinhaltend: einen zweiten Sekundärkopplungsmechanismus, der an den Haken (2102) gekoppelt ist, wobei der erste Sekundärkopplungsmechanismus unter Verwendung eines Riemens mit dem zweiten Sekundärkopplungsmechanismus gekoppelt wird.

5. Abnehmbare Adapterstangenvorrichtung (2302) zum Koppeln mit und sicheren Transportieren von einem Fahrrad unter Verwendung eines Fahrzeugs gemäß Anspruch 1, wobei es sich bei dem zweiten Eingriffsmechanismus um eine Schelle handelt.

6. Abnehmbare Adapterstangenvorrichtung (2302) zum Koppeln mit und zum sicheren Transportieren von einem Fahrrad unter Verwendung eines Fahrzeugs gemäß Anspruch 5, wobei die Schelle Folgendes beinhaltet: einen ersten Arm und einen zweiten Arm, die in entgegengesetzten Stellungen orientiert sind und betriebsfähig sind, um eine Fahrradstange abnehmbar und sicher zu greifen.

7. Abnehmbare Adapterstangenvorrichtung zum Koppeln mit und zum sicheren Transportieren von einem Fahrrad unter Verwendung eines Fahrzeugs gemäß Anspruch 6, wobei die Schelle ferner Folgendes beinhaltet: einen Nockenverriegelungsmechanismus.

8. Abnehmbare Adapterstangenvorrichtung zum Koppeln mit und zum sicheren Transportieren von einem Fahrrad unter Verwendung eines Fahrzeugs gemäß Anspruch 7, wobei der erste Arm der Schelle ferner Folgendes beinhaltet: ein erstes Gewindeloch durch den ersten Arm, das betriebsfähig ist, um einen Gewindezapfen aufzunehmen, um den ersten und den zweiten Arm in Bezug aufeinander gelenkig zu verbinden.

9. Abnehmbare Adapterstangenvorrichtung zum Koppeln mit und zum sicheren Transportieren von einem Fahrrad unter Verwendung eines Fahrzeugs gemäß Anspruch 8, wobei der zweite Arm der Schelle ferner Folgendes beinhaltet: ein zweites Gewindeloch durch den zweiten Arm, das betriebsfähig ist, um einen Gewindezapfen aufzunehmen, um den ersten und den zweiten Arm in Bezug aufeinander gelenkig zu verbinden.

10. Abnehmbare Adapterstangenvorrichtung zum Koppeln mit und zum sicheren Transportieren von einem Fahrrad unter Verwendung eines Fahrzeugs gemäß Anspruch 9, wobei das erste und das zweite Gewindeloch entgegengesetzte Orientierungen aufweisen und wobei der Gewindezapfen zwei Abschnitte mit entgegengesetzten Orientierungen aufweist.

11. Abnehmbare Adapterstangenvorrichtung zum Koppeln mit und zum sicheren Transportieren von einem Fahrrad unter Verwendung eines Fahrzeugs gemäß Anspruch 6, wobei die Schelle ferner Folgendes beinhaltet: ein Endstück, das sich nahe einem Gelenk zwischen dem ersten und dem zweiten Arm befindet, das betriebsfähig ist, um die Schelle abnehmbar mit dem Ende der inneren Hülse zu koppeln.

12. Abnehmbare Adapterstangenvorrichtung zum Koppeln mit und zum sicheren Transportieren von einem Fahrrad unter Verwendung eines Fahrzeugs gemäß Anspruch 6, wobei die Schelle ferner Folgendes beinhaltet: eine erste Greiffläche auf einer nach innen weisenden Seite des ersten Arms; und eine zweite Greiffläche auf einer nach innen weisenden Seite des zweiten Arms.

13. Abnehmbare Adapterstangenvorrichtung zum Koppeln mit und zum sicheren Transportieren von einem Fahrrad unter Verwendung eines Fahrzeugs gemäß Anspruch 6, wobei die Schelle ferner Folgendes beinhaltet: ein Schellenkopplungsgebilde, das an den ersten Arm gekoppelt ist; und einen an den zweiten Arm gekoppelten Riemen, der betriebsfähig ist, um mit dem Schellenkopplungsgebilde um eine Stange des Fahrrads gekoppelt zu werden.

## Revendications

1. Un dispositif formant barre adaptatrice amovible (2302) destiné à s'accoupler à une bicyclette et à transporter celle-ci de manière sécurisée à l'aide d'un véhicule, comprenant : un manchon externe ; un manchon interne (2208), pouvant être mis en oeuvre pour se mettre en prise par coulissement avec le manchon externe (2204) ; une pince réglable (2206) pour assujettir les manchons externe et interne dans une position fixe l'un par rapport à l'autre ; un premier mécanisme de mise en prise (2310) accouplé à une extrémité du manchon externe ; un deuxième mécanisme de mise en prise (2202) accouplé à une extrémité du manchon interne et à l'opposé du premier mécanisme de mise en prise ; dans lequel les premier et deuxième mécanismes de mise en prise peuvent être mis en oeuvre pour s'accoupler à une tige de selle d'une bicyclette et à une tige près du guidon de la bicyclette pour assujettir la bicyclette durant le transport ou le stockage, **caractérisé en ce que** le dispositif formant barre adaptatrice amovible comprend en outre un mécanisme d'accouplement primaire (2314) destiné à s'accoupler à un mécanisme d'accouplement complémentaire d'un appareil de transport ou de stockage,
dans lequel le mécanisme d'accouplement primaire est une pièce de mise en prise mâle qui peut être mise en oeuvre pour se mettre en prise avec un récepteur de mise en prise femelle pour le stockage et le transport de la barre adaptatrice et dans lequel la pièce de mise en prise mâle a une section transversale trapézoïdale.

2. Le dispositif formant barre adaptatrice amovible (2302) destiné à s'accoupler à une bicyclette et à transporter celle-ci de manière sécurisée à l'aide d'un véhicule de la revendication 1, dans lequel le premier mécanisme de mise en prise (2310) est un crochet (2102).

3. Le dispositif formant barre adaptatrice amovible (2302) destiné à s'accoupler à une bicyclette et à transporter celle-ci de manière sécurisée à l'aide d'un véhicule de la revendication 2, comprenant en outre : un premier mécanisme d'accouplement secondaire (2112) accouplé au crochet (2102).

4. Le dispositif formant barre adaptatrice amovible (2302) destiné à s'accoupler à une bicyclette et à transporter celle-ci de manière sécurisée à l'aide d'un véhicule de la revendication 3, comprenant en outre : un deuxième mécanisme d'accouplement secondaire accouplé au crochet (2102), dans lequel le premier mécanisme d'accouplement secondaire est accouplé au deuxième mécanisme d'accouplement secondaire à l'aide d'une sangle.

5. Le dispositif formant barre adaptatrice amovible (2302) destiné à s'accoupler à une bicyclette et à transporter celle-ci de manière sécurisée à l'aide d'un véhicule de la revendication 1, dans lequel le deuxième mécanisme de mise en prise est une pince.

6. Le dispositif formant barre adaptatrice amovible (2302) destiné à s'accoupler à une bicyclette et à transporter celle-ci de manière sécurisée à l'aide d'un véhicule de la revendication 5, dans lequel la pince comprend : un premier bras et un deuxième bras qui sont orientés dans des positions opposées et peuvent être mis en oeuvre pour saisir de manière amovible et sécurisée une barre de bicyclette.

7. Le dispositif formant barre adaptatrice amovible destiné à s'accoupler à une bicyclette et à transporter celle-ci de manière sécurisée à l'aide d'un véhicule de la revendication 6, dans lequel la pince comprend en outre : un mécanisme de verrouillage à came.

8. Le dispositif formant barre adaptatrice amovible destiné à s'accoupler à une bicyclette et à transporter celle-ci de manière sécurisée à l'aide d'un véhicule de la revendication 7, dans lequel le premier bras de la pince comprend en outre : un premier trou taraudé à travers le premier bras qui peut être mis en oeuvre pour recevoir une tige filetée afin d'articuler les premier et deuxième bras l'un par rapport à l'autre.

9. Le dispositif formant barre adaptatrice amovible destiné à s'accoupler à une bicyclette et à transporter celle-ci de manière sécurisée à l'aide d'un véhicule de la revendication 8, dans lequel le deuxième bras de la pince comprend en outre : un deuxième trou taraudé à travers le deuxième bras qui peut être mis en oeuvre pour recevoir une tige filetée afin d'articuler les premier et deuxième bras l'un par rapport à l'autre.

10. Le dispositif formant barre adaptatrice amovible destiné à s'accoupler à une bicyclette et à transporter celle-ci de manière sécurisée à l'aide d'un véhicule de la revendication 9, dans lequel les premier et deuxième trous taraudés ont des orientations opposées et dans lequel la tige filetée a deux sections avec des orientations opposées.

11. Le dispositif formant barre adaptatrice amovible destiné à s'accoupler à une bicyclette et à transporter celle-ci de manière sécurisée à l'aide d'un véhicule de la revendication 6, dans lequel la pince comprend en outre : une pièce d'extrémité située près d'une charnière entre les premier et deuxième bras qui peut être mise en oeuvre pour accoupler de manière amovible la pince à l'extrémité du manchon interne.

12. Le dispositif formant barre adaptatrice amovible destiné à s'accoupler à une bicyclette et à transporter celle-ci de manière sécurisée à l'aide d'un véhicule de la revendication 6, dans lequel la pince comprend en outre : une première surface de préhension sur un côté tourné vers l'intérieur du premier bras ; et une deuxième surface de préhension sur un côté tourné vers l'intérieur du deuxième bras.

13. Le dispositif formant barre adaptatrice amovible destiné à s'accoupler à une bicyclette et à transporter celle-ci de manière sécurisée à l'aide d'un véhicule de la revendication 6, dans lequel la pince comprend en outre : un élément d'accouplement de pince qui est accouplé au premier bras ; et une sangle, accouplée au deuxième bras, qui peut être mise en oeuvre pour être accouplée à l'élément d'accouplement de pince autour d'une barre de la bicyclette.
